# EUROPEAN PATENT APPLICATION

(11) **EP 4 818 244 A1**
(43) Date of publication of application: **07.10.2026**
(21) Application number: 25758552.1
(22) Date of filing: 12.02.2025
(51) Int. Cl.: C08J 9/26, C08J 5/18, B29C 55/02, H01M 50/417, H01M 10/052

(54) **SOLVENT COMPOSITION AND METHOD FOR MANUFACTURING POROUS FILM USING SAME**

(30) Priority: 20.02.2024 KR 20240024116
(71) Applicant: W-Scope Korea Co., Ltd., Cheongju-si, Chungcheongbuk-do 28122 (KR); W-Scope Chungju Plant Co., Ltd., Daesowon-myeon Chungju-si, Chungcheongbuk-do 27461 (KR)
(72) Inventor: PARK, Pyung Yong, Cheongju-si, Chungcheongbuk-do 28122 (KR); KIM, Byung Hyun, Cheongju-si, Chungcheongbuk-do 28122 (KR)
(74) Representative: BCKIP Part mbB
(86) International application number: PCT/KR2025/002045
(87) International publication number: WO 2025/178306

(57) **Abstract**

One aspect of the present invention provides a solvent composition used for manufacturing a porous film having a plurality of pores by selectively extracting and removing a pore-forming agent from a base film comprising a polyolefin and a pore-forming agent, the solvent composition comprising at least one of an alkyl carbonate and an alkyl acetate, and a non-chlorinated halogen compound, and a method for manufacturing a porous film using the same.

## Description

### [Technical Field]

The present invention relates to a solvent composition and a method for manufacturing a porous film using the same, and more particularly, to a solvent composition capable of effectively replacing chlorine-based solvents that are harmful to the human body and the environment, and a method for manufacturing a porous film using the same.

### [Background Art]

Lithium secondary batteries are widely used as power sources for various electric products requiring miniaturization and weight reduction, such as smartphones, laptops, and tablet PCs. As the range of applications expands to include smart grids and medium-to-large batteries for electric vehicles, there is a growing demand for lithium secondary batteries with high capacity, long lifespan, and high stability.

As a means of achieving the above objectives, porous film-type separators having micropores that separate the positive and negative electrodes to prevent internal short circuits and facilitate the movement of lithium ions during charge and discharge processes are being developed in various ways. In particular, microporous separators using polyolefins such as polyethylene, which are advantageous for pore formation by thermally induced phase separation, economical, and easy to satisfy the physical properties required for separators, are being developed in various ways.

The manufacturing process of separators for lithium secondary batteries can be classified into wet and dry processes based on the method of forming pores. In the wet process, a raw material mixture containing a main resin and a separate pore-forming agent is extruded and stretched to produce a precursor film, and then the precursor film is brought into contact with a solvent capable of selectively dissolving the pore-forming agent to extract and remove the pore-forming agent from the precursor film, thereby forming pores at the positions where the pore-forming agent was located. In the dry process, the main resin is extruded to produce a precursor film, and pores are formed during stretching of the precursor film. That is, in the dry process, the pore-forming agent and the steps for extracting and removing it, which are essential in the wet process, are omitted, and the size and structure of the pores depend solely on the stretching of the precursor film, resulting in non-uniform pores and, in some cases, pin-hole defects. For this reason, most commercial separators are manufactured by the wet process.

In the wet process, chlorinated halogen solvents such as dichloromethane and trichloroethylene, which have excellent extraction performance and quick-drying properties, are used as solvents for selectively dissolving and extracting/removing the pore-forming agent from the precursor film. However, as the carcinogenicity, toxicity, and environmental hazards of these chlorinated materials have recently come to the fore, alternative solvents are being developed.

Halogen-free solvents such as methyl ethyl ketone, acetone, and methanol have been proposed, but these are explosive and flammable at room temperature, making them unsafe and difficult to handle. Synthetic solvents such as isoparaffinic hydrocarbon solvents have also been proposed, but these have disadvantages in terms of selective solubility and extractability for the pore-forming agent, as well as quick-drying performance and resulting productivity, including excessive drying time.

### [Detailed Description of the Invention]

### [Technical Problem]

The present invention is intended to solve the problems of the prior art described above. The object of the present invention is to provide a solvent composition and a method for manufacturing a porous film using the same, which can effectively replace the chlorinated solvents conventionally used for selectively extracting and removing the pore-forming agent from a base film containing a polyolefin and a pore-forming agent, significantly reducing harm to the human body and the environment, and which can be quickly dried and removed from the base film during the manufacture of the porous film to secure and maintain the required level of productivity.

### [Technical Solution]

One aspect of the present invention provides a solvent composition used for manufacturing a porous film having a plurality of pores by selectively extracting and removing a pore-forming agent from a base film containing a polyolefin and a pore-forming agent, the solvent composition comprising at least one of an alkyl carbonate and an alkyl acetate, and a non-chlorinated halogen compound.

In one embodiment, the alkyl carbonate may be one selected from the group consisting of ethylene carbonate, propylene carbonate, dimethyl carbonate, diethyl carbonate, dipropyl carbonate, methylpropyl carbonate, ethylmethyl carbonate, ethylpropyl carbonate, 1,2-butylene carbonate, 2,3-butylene carbonate, 1,2-pentylene carbonate, 2,3-pentylene carbonate, fluoroethylene carbonate, fluoropropylene carbonate, difluoropropylene carbonate, bromopropylene carbonate, dibromopropylene carbonate, nitropropylene carbonate, cyanopropylene carbonate, and combinations of two or more thereof.

In one embodiment, the alkyl acetate may be one selected from the group consisting of methyl acetate, ethyl acetate, propyl acetate, butyl acetate, and combinations of two or more thereof.

In one embodiment, the non-chlorinated halogen compound may comprise a fluorine-based ether compound.

In one embodiment, the fluorine-based ether compound may be one selected from the group consisting of 1,1,2,2-tetrafluoroethyl 2,2,2-trifluoroethyl ether; 1,1,2,2-tetrafluoroethyl 2,2,3,3-tetrafluoropropyl ether; bis(fluoromethyl) ether; 2-fluoromethyl ether; bis(2,2,2-trifluoroethyl) ether; propyl 1,1,2,2-tetrafluoroethyl ether; isopropyl 1,1,2,2-tetrafluoroethyl ether; 1,1,2,2-tetrafluoroethyl isobutyl ether; 1,1,2,3,3,3-hexafluoropropyl ethyl ether; 1H,1H,2'H,3H-decafluorodipropyl ether; 1H,1H,2'H-perfluorodipropyl ether; and combinations of two or more thereof.

In one embodiment, the non-chlorinated halogen compound may comprise a bromine-based compound.

In one embodiment, the bromine-based compound may be one selected from the group consisting of dibromomethane, dibromoethane, dibromopropane, dibromobutane, dibromocyclohexane, dibromobenzene, and combinations of two or more thereof.

In one embodiment, the content of the non-chlorinated halogen compound in the solvent composition may be 5 to 30% by weight.

In one embodiment, the Kauri-butanol value of the solvent composition may be 100 or more.

Another aspect of the present invention provides a method for manufacturing a porous film using the solvent composition, comprising: (a) forming a raw material comprising a polyolefin and a pore-forming agent to manufacture a base film; (b) applying the solvent composition to the base film to selectively extract and remove the pore-forming agent from the base film; and (c) drying the base film to remove the remaining solvent composition.

In one embodiment, the polyolefin may include one selected from the group consisting of polyethylene, polypropylene, polybutylene, polymethylpentene, ethylene vinyl acetate, ethylene butyl acrylate, ethylene ethyl acrylate, and combinations or copolymers of two or more thereof.

In one embodiment, the pore-forming agent may be a paraffin oil having a kinematic viscosity of 50 to 100 cSt at 40°C.

In one embodiment, the drying in step (c) may be performed for 1 to 20 minutes.

In one embodiment, the method for manufacturing a porous film may further comprise, between steps (a) and (b), a step (b0) of stretching the base film.

In one embodiment, the method for manufacturing a porous film may further comprise, between steps (b) and (c), a step (b1) of stretching the product of step (b).

### [Effect of the Invention]

The solvent composition according to one aspect of the present invention is used for manufacturing a porous film having a plurality of pores by selectively extracting and removing a pore-forming agent from a base film containing a polyolefin and a pore-forming agent, and by comprising at least one of an alkyl carbonate and an alkyl acetate, and a non-chlorinated halogen compound, it can effectively replace chlorinated solvents that are harmful to the human body and the environment, and can be quickly dried and removed from the base film during the manufacture of the porous film, thereby securing and maintaining the required level of productivity.

The effects of the present invention are not limited to those described above, and should be understood to include all effects that can be inferred from the configuration of the invention described in the detailed description or claims of the present invention.

### [Modes of the Invention]

Hereinafter, the present invention will be described. However, the present invention may be embodied in many different forms and should not be construed as being limited to the embodiments described herein.

Throughout the specification, when a part is described as being "connected" to another part, this includes not only "directly connected" but also "indirectly connected" with another element in between. Also, when a part is described as "comprising" a certain element, this does not mean that other elements are excluded, but rather that other elements may be further included, unless otherwise stated.

One aspect of the present invention provides a solvent composition used for manufacturing a porous film having a plurality of pores by selectively extracting and removing a pore-forming agent from a base film comprising a polyolefin and a pore-forming agent, the solvent composition comprising at least one of an alkyl carbonate and an alkyl acetate, and a non-chlorinated halogen compound.

The manufacturing process of a porous film is classified into a dry process and a wet process depending on the method of forming pores, the raw materials, and other factors. In the wet process, a raw material mixture comprising a main resin and a separate pore-forming agent is extruded to produce a base film or a precursor film, and then the base film is brought into contact with a solvent capable of selectively dissolving the pore-forming agent, for example, a single solvent or a mixed solvent (solvent composition), to extract and remove the pore-forming agent from the base film, thereby forming pores at the positions in the base film where the pore-forming agent was located.

In order to adequately secure the pores of the porous film in the wet process, not only must the selectivity and solubility of the solvent for extracting and removing the pore-forming agent be sufficiently secured, but also the quick-drying property must be importantly considered from the perspective of productivity, since the solvent remaining in the base film after the extraction process must be quickly dried and removed.

Chlorinated halogen solvents such as dichloromethane and trichloroethylene are widely used as such solvents. However, as the carcinogenicity, toxicity, and environmental hazards of these chlorinated materials have recently come to the fore, the need for alternative solvents has emerged. In response, halogen-free solvents such as methyl ethyl ketone, acetone, and methanol have been proposed, but these are explosive and flammable at room temperature, making them unsafe and difficult to handle. Synthetic solvents such as isoparaffinic hydrocarbon solvents have also been proposed, but these have disadvantages in terms of selective solubility and extractability for the pore-forming agent, as well as quick-drying performance and resulting productivity, including excessive drying time.

In response to this, the solvent composition, by comprising at least one of an alkyl carbonate and an alkyl acetate, and a non-chlorinated halogen compound, can effectively replace chlorinated solvents that are harmful to the human body and the environment, and can be quickly dried and removed from the base film during the manufacture of the porous film, thereby securing and maintaining the required level of productivity. The solvent composition may comprise an alkyl carbonate and a non-chlorinated halogen compound, or an alkyl acetate and a non-chlorinated halogen compound, or an alkyl carbonate, an alkyl acetate, and a non-chlorinated compound.

The alkyl carbonate may be, for example, one selected from the group consisting of ethylene carbonate, propylene carbonate, dimethyl carbonate, diethyl carbonate, dipropyl carbonate, methylpropyl carbonate, ethylmethyl carbonate, ethylpropyl carbonate, 1,2-butylene carbonate, 2,3-butylene carbonate, 1,2-pentylene carbonate, 2,3-pentylene carbonate, fluoroethylene carbonate, fluoropropylene carbonate, difluoropropylene carbonate, bromopropylene carbonate, dibromopropylene carbonate, nitropropylene carbonate, cyanopropylene carbonate, and combinations of two or more thereof, preferably one selected from the group consisting of ethylene carbonate, propylene carbonate, dimethyl carbonate, diethyl carbonate, dipropyl carbonate, and combinations of two or more thereof, and more preferably dimethyl carbonate, but is not limited thereto.

The alkyl carbonate not only selectively dissolves and removes the pore-forming agent, but is also a component of commonly used electrolytes for lithium secondary batteries. Therefore, even if a trace amount remains in the porous film, it may have a beneficial effect in terms of affinity and wettability with respect to the electrolyte during battery assembly.

The alkyl acetate may be, for example, one selected from the group consisting of methyl acetate, ethyl acetate, propyl acetate, butyl acetate, and combinations of two or more thereof, preferably at least one of ethyl acetate and propyl acetate, and more preferably propyl acetate, but is not limited thereto.

Since the alkyl carbonate and/or the alkyl acetate have excellent selective solubility for the pore-forming agent but are explosive and flammable at room temperature, the safety and handleability can be appropriately supplemented by further including a non-chlorinated halogen compound in the solvent composition. The non-chlorinated halogen compound may comprise a fluorine-based ether compound and/or a bromine-based compound.

The fluorine-based ether compound may be, for example, one selected from the group consisting of 1,1,2,2-tetrafluoroethyl 2,2,2-trifluoroethyl ether; 1,1,2,2-tetrafluoroethyl 2,2,3,3-tetrafluoropropyl ether; bis(fluoromethyl) ether; 2-fluoromethyl ether; bis(2,2,2-trifluoroethyl) ether; propyl 1,1,2,2-tetrafluoroethyl ether; isopropyl 1,1,2,2-tetrafluoroethyl ether; 1,1,2,2-tetrafluoroethyl isobutyl ether; 1,1,2,3,3,3-hexafluoropropyl ethyl ether; 1H,1H,2'H,3H-decafluorodipropyl ether; 1H,1H,2'H-perfluorodipropyl ether; and combinations of two or more thereof, preferably 1,1,2,2-tetrafluoroethyl 2,2,2-trifluoroethyl ether and/or 1,1,2,2-tetrafluoroethyl 2,2,3,3-tetrafluoropropyl ether, and more preferably 1,1,2,2-tetrafluoroethyl 2,2,2-trifluoroethyl ether, but is not limited thereto.

The bromine-based compound may be, for example, one selected from the group consisting of dibromomethane, dibromoethane, dibromopropane, dibromobutane, dibromocyclohexane, dibromobenzene, and combinations of two or more thereof, preferably one selected from the group consisting of dibromomethane, dibromoethane, dibromopropane, and combinations of two or more thereof, and more preferably dibromomethane, but is not limited thereto.

The content of the non-chlorinated halogen compound in the solvent composition may be 5 to 30% by weight, more preferably 5 to 15% by weight, and even more preferably 5 to 10% by weight. If the content of the non-chlorinated halogen compound in the solvent composition is less than 5% by weight, it is difficult to suppress the explosiveness and flammability of the alkyl carbonate and/or the alkyl acetate at room temperature, and if it exceeds 30% by weight, the selective solubility and quick-drying property of the solvent composition for the pore-forming agent may be reduced.

The Kauri-butanol value (ASTM D 1133) of the solvent composition may be 100 or more, preferably 110 or more, and more preferably 120 to 130. If the Kauri-butanol value of the solvent composition is less than 100, the selective solubility for the pore-forming agent decreases, and accordingly, an excessive amount of time is required to extract and remove the pore-forming agent, which may reduce productivity.

Another aspect of the present invention provides a method for manufacturing a porous film using the solvent composition, comprising: (a) forming a raw material comprising a polyolefin and a pore-forming agent to manufacture a base film; (b) applying the solvent composition to the base film to selectively extract and remove the pore-forming agent from the base film; and (c) drying the base film to remove the remaining solvent composition.

In step (a), a base film can be obtained by extruding a raw material comprising a polyolefin and a pore-forming agent and discharging it through a T-die. The weight average molecular weight (Mw) of the polyolefin may be 200,000 to 4,000,000, preferably 400,000 to 2,000,000, and more preferably 600,000 to 1,500,000, and the molecular weight distribution (Mw/Mn) may be 3 to 7. If the weight average molecular weight of the polyolefin is less than 200,000, the mechanical strength of the porous film may be reduced, and if it exceeds 4,000,000, the heat shrinkage rate may increase excessively, reducing heat resistance. In addition, if the molecular weight distribution of the polyolefin is less than 3, the dispersibility with the pore-forming agent may be reduced, resulting in reduced uniformity of the manufactured porous film, and if it exceeds 7, the mechanical properties of the porous film may be reduced. As used herein, the terms "weight average molecular weight" and "molecular weight distribution" refer to values determined by gel permeation chromatography (GPC) calibrated with polystyrene standards. Specifically, the measurement is performed at a temperature of 140°C using 1,2,4-trichlorobenzene as an eluent, followed by calculating the molecular weight distribution using a conventional size-exclusion chromatography calibration method for polyolefins.

The polyolefin may include, for example, one selected from the group consisting of polyethylene, polypropylene, polybutylene, polymethylpentene, ethylene vinyl acetate, ethylene butyl acrylate, ethylene ethyl acrylate, and combinations or copolymers of two or more thereof, preferably polyethylene and/or polypropylene, and more preferably polyethylene, but is not limited thereto.

The pore-forming agent may be one selected from the group consisting of paraffin oil, paraffin wax, mineral oil, solid paraffin, soybean oil, rapeseed oil, palm oil, coconut oil, di-2-ethylhexyl phthalate, dibutyl phthalate, diisononyl phthalate, diisodecyl phthalate, bis(2-propylheptyl) phthalate, naphthenic oil, and combinations of two or more thereof, preferably paraffin oil, and more preferably paraffin oil having a kinematic viscosity of 50 to 100 cSt at 40°C, but is not limited thereto. The raw material may comprise 10 to 50% by weight, preferably 20 to 40% by weight of the polyolefin, and 50 to 90% by weight, preferably 60 to 80% by weight of the pore-forming agent.

The thickness of the base film obtained in step (a) may be 1,000 to 1,500 µm, preferably 1,200 to 1,500 µm. When the raw material comprises an ultra-high molecular weight polyolefin, for example, ultra-high molecular weight polyethylene having a weight average molecular weight of 2,000,000 or more, it is difficult to control the thickness of the base film to less than 1,000 µm through extrusion and casting, and if the thickness of the base film exceeds 1,500 µm, it is difficult to thin the porous film even by subsequent stretching.

In step (b), the solvent composition is applied to the base film to selectively extract and remove the pore-forming agent from the base film. The base film may be immersed in an extraction bath containing a solution comprising the solvent composition for a predetermined period of time to extract and remove the pore-forming agent. After extraction, the content of the pore-forming agent remaining on the surface and/or inside of the base film may be 1% by weight or less. The time required for extracting and removing the pore-forming agent may be determined by the thickness, porosity, and other properties of the base film and/or the porous film, but when the thickness and porosity of the porous film are 1 to 20 µm and 30 to 70% by volume, respectively, the time may be 30 minutes or less, preferably 10 minutes or less, and more preferably 5 minutes or less.

In step (c), the base film is dried to remove the remaining solvent composition. The base film from which the pore-forming agent has been extracted and removed may be heated to remove the solvent composition remaining in the base film. Some of the solvent composition applied in step (b) may remain on the surface and/or inside of the base film. The remaining solvent composition may deteriorate the properties of the subsequent process and the porous film produced therefrom, so the base film may be appropriately heated to a temperature above the boiling point of the solvent composition to remove the solvent composition remaining in the base film.

The drying in step (c) may be performed for 1 to 20 minutes, preferably 1 to 15 minutes, and more preferably 1 to 10 minutes. If the drying time exceeds 20 minutes, the productivity and energy efficiency of the process may be reduced, and if it is less than 1 minute, it is difficult to adequately remove the solvent composition remaining in the base film.

The method for manufacturing a porous film may further comprise: (b0) stretching the base film between steps (a) and (b); and/or (b1) stretching the product of step (b) between steps (b) and (c).

The stretching may be performed by sequential biaxial stretching in which the base film is stretched in the machine direction (MD) at a predetermined stretch ratio and then in the transverse direction (TD), or by simultaneous biaxial stretching in which the base film is simultaneously stretched in both the machine direction (MD) and the transverse direction (TD). As used herein, the term "stretch ratio" refers to the ratio of the length in the machine direction (MD) or transverse direction (TD) after stretching to the length in the machine direction (MD) or transverse direction (TD) before stretching, and may be interpreted as having the same meaning as stretch magnification, stretch rate, etc. In the case of sequential biaxial stretching, the stretch magnification may be 2 to 20 times in each of the transverse direction (TD) and machine direction (MD), and the resulting area magnification may be 4 to 400 times.

The machine direction (MD) stretching of the base film may be performed using a roll stretcher. The roll stretcher is a device that stretches the base film along the transport direction of the base film in the process line, and the stretching direction of the base film by the roll stretcher may be defined as the machine direction (MD). The roll stretcher may include a plurality of rolls installed along the transport direction of the base film, and may stretch the base film along the machine direction at a predetermined magnification by rotating the rolls located at the rear end faster than the rolls located at the front end.

The transverse direction (TD) stretching of the base film may be performed using a tenter stretcher. The tenter stretcher is a device that stretches the base film in the direction perpendicular to the transport direction of the base film in the process line. It may stretch the base film along the transverse direction at a predetermined magnification by fixing both ends of the base film in the transverse direction with predetermined members such as chucks and clips, and then separating the members in the transverse direction.

Meanwhile, the method for manufacturing a porous film may further comprise, after step (c), a process of stretching the porous film in the transverse direction (TD) and heat-setting it. The heat-setting refers to a process of forcibly fixing the porous film, which tends to shrink, by applying heat while the porous film is stretched in the transverse direction (TD) and then relaxed and fixed, thereby removing residual stress. A higher heat-setting temperature is advantageous for reducing the shrinkage rate, but if the temperature is excessively high, the porous film may partially melt, causing the formed pores to close and reducing the air permeability. The heat-setting temperature is preferably selected in a range where 10 to 30% by weight of the crystalline portion of the porous film melts. If the heat-setting temperature is selected within the above range, it is possible to prevent both the problem of insufficient residual stress removal due to insufficient rearrangement of polyolefin molecules in the porous film and the problem of reduced air permeability due to pore closure by partial melting. For example, the heat-setting temperature may be 120 to 140°C, preferably 123 to 135°C, and the heat-setting time may be 5 seconds to 1 minute.

Hereinafter, the embodiments of the present invention will be described in detail.

### Example 1

40 parts by weight of high-density polyethylene (HDPE) having a weight average molecular weight of 600,000 and a molecular weight distribution (Mw/Mn) of 5, and 60 parts by weight of paraffin oil having a kinematic viscosity of 70 cSt at 40°C were mixed and fed into a twin-screw extruder (inner diameter 58 mm, L/D=56). The mixture was discharged from the twin-screw extruder to a T-die with a width of 630 mm at a screw rotation speed of 40 rpm and 200°C, and then passed through a casting roll at a temperature of 17°C to produce a base film with a thickness of 1,450 µm.

The base film was stretched 8.0 times in the machine direction (MD) using a roll stretcher at 105°C (MDO process), and 9.5 times in the transverse direction (TD) using a tenter stretcher at 125°C (TDO1 process). The film was then immersed in an extraction bath (25°C) containing an extraction solvent comprising dimethyl carbonate (DMC) and 1,1,2,2-tetrafluoroethyl 2,2,2-trifluoroethyl ether (TFEE) at a weight ratio of 90:10, respectively, for 5 minutes to extract and remove the paraffin oil, and then dried at 50°C to produce a porous film. The porous film was stretched 1.7 times in the transverse direction (TD) at 134°C (TDO2 process) and then heat-set with an 18% relaxation.

### Example 2

A porous film was manufactured in the same manner as in Example 1, except that the extraction solvent was replaced with one comprising dimethyl carbonate (DMC) and 1,1,2,2-tetrafluoroethyl 2,2,2-trifluoroethyl ether (TFEE) at a weight ratio of 95:5, respectively.

### Example 3

A porous film was manufactured in the same manner as in Example 1, except that the extraction solvent was replaced with one comprising propyl acetate (PA) and 1,1,2,2-tetrafluoroethyl 2,2,2-trifluoroethyl ether (TFEE) at a weight ratio of 90:10, respectively.

### Example 4

A porous film was manufactured in the same manner as in Example 1, except that the extraction solvent was replaced with one comprising propyl acetate (PA) and dibromomethane (BM) at a weight ratio of 90:10, respectively.

### Example 5

A porous film was manufactured in the same manner as in Example 1, except that the extraction solvent was replaced with one comprising dimethyl carbonate (DMC) and 1,1,2,2-tetrafluoroethyl 2,2,2-trifluoroethyl ether (TFEE) at a weight ratio of 80:20, respectively.

### Example 6

A porous film was manufactured in the same manner as in Example 1, except that the extraction solvent was replaced with one comprising dimethyl carbonate (DMC) and dibromomethane (BM) at a weight ratio of 80:20, respectively.

### Example 7

A porous film was manufactured in the same manner as in Example 1, except that the extraction solvent was replaced with one comprising dimethyl carbonate (DMC), propyl acetate (PA), 1,1,2,2-tetrafluoroethyl 2,2,2-trifluoroethyl ether (TFEE), and dibromomethane (BM) at a weight ratio of 40:40:10:10, respectively.

### Example 8

A porous film was manufactured in the same manner as in Example 1, except that the extraction solvent was replaced with one comprising dimethyl carbonate (DMC) and 1,1,2,2-tetrafluoroethyl 2,2,2-trifluoroethyl ether (TFEE) at a weight ratio of 70:30, respectively.

### Example 9

A porous film was manufactured in the same manner as in Example 1, except that the extraction solvent was replaced with one comprising dimethyl carbonate (DMC) and dibromomethane (BM) at a weight ratio of 70:30, respectively.

### Comparative Example 1

A porous film was manufactured in the same manner as in Example 1, except that the extraction solvent was replaced with a single solvent of dichloromethane (MC).

### Comparative Example 2

A porous film was manufactured in the same manner as in Example 1, except that the extraction solvent was replaced with a single solvent of trichloroethylene (TCE).

### Comparative Example 3

A porous film was manufactured in the same manner as in Example 1, except that the extraction solvent was replaced with a single solvent of methyl ethyl ketone (MEK).

### Comparative Example 4

A porous film was manufactured in the same manner as in Example 1, except that the extraction solvent was replaced with a single solvent of acetone.

### Comparative Example 5

A porous film was manufactured in the same manner as in Example 1, except that the extraction solvent was replaced with a single solvent of methanol.

### Comparative Example 6

A porous film was manufactured in the same manner as in Example 1, except that the extraction solvent was replaced with a single solvent of Isopar G (Isoparaffinic Hydrocarbon Solvent, ExxonMobil Chemical).

### Comparative Example 7

A porous film was manufactured in the same manner as in Example 1, except that the extraction solvent was replaced with one comprising dimethyl carbonate (DMC) and 1,1,2,2-tetrafluoroethyl 2,2,2-trifluoroethyl ether (TFEE) at a weight ratio of 65:35, respectively.

### Comparative Example 8

A porous film was manufactured in the same manner as in Example 1, except that the extraction solvent was replaced with one comprising dimethyl carbonate (DMC) and dibromomethane (BM) at a weight ratio of 65:35, respectively.

### Comparative Example 9

A porous film was manufactured in the same manner as in Example 1, except that the extraction solvent was replaced with one comprising dimethyl carbonate (DMC) and 1,1,2,2-tetrafluoroethyl 2,2,2-trifluoroethyl ether (TFEE) at a weight ratio of 97:3, respectively.

### Comparative Example 10

A porous film was manufactured in the same manner as in Example 1, except that the extraction solvent was replaced with a single solvent of dimethyl carbonate (DMC).

### Comparative Example 11

A porous film was manufactured in the same manner as in Example 1, except that the extraction solvent was replaced with one comprising propyl acetate (PA) and 1,1,2,2-tetrafluoroethyl 2,2,2-trifluoroethyl ether (TFEE) at a weight ratio of 65:35, respectively.

### Comparative Example 12

A porous film was manufactured in the same manner as in Example 1, except that the extraction solvent was replaced with one comprising propyl acetate (PA) and dibromomethane (BM) at a weight ratio of 65:35, respectively.

### Comparative Example 13

A porous film was manufactured in the same manner as in Example 1, except that the extraction solvent was replaced with one comprising propyl acetate (PA) and 1,1,2,2-tetrafluoroethyl 2,2,2-trifluoroethyl ether (TFEE) at a weight ratio of 97:3, respectively.

### Comparative Example 14

A porous film was manufactured in the same manner as in Example 1, except that the extraction solvent was replaced with a single solvent of propyl acetate (PA).

The compositions of the extraction solvents according to the above examples and comparative examples are shown in Tables 1 to 3 below.

**[Table 1]**

| Item | DMC | PA | TFEE | BM |
|---|---|---|---|---|
| Example 1 | 90 | - | 10 | - |
| Example 2 | 95 | - | 5 | - |
| Example 3 | - | 90 | 10 | - |
| Example 4 | - | 90 | - | 10 |
| Example 5 | 80 | - | 20 | - |
| Example 6 | 80 | - | - | 20 |
| Example 7 | 40 | 40 | 10 | 10 |
| Example 8 | 70 | - | 30 | - |
| Example 9 | 70 | - | - | 30 |

| | | | | |
|---|---|---|---|---|
| (Unit: parts by weight) | | | | |

**[Table 2]**

| Item | MC | TCE | MEK | Acetone | Methanol | Isopar G |
|---|---|---|---|---|---|---|
| Comparative Example 1 | 100 | - | - | - | - | - |
| Comparative Example 2 | - | 100 | - | - | - | - |
| Comparative Example 3 | - | - | 100 | - | - | - |
| Comparative Example 4 | - | - | - | 100 | - | - |
| Comparative Example 5 | - | - | - | - | 100 | - |
| Comparative Example 6 | - | - | - | - | - | 100 |

| | | | | | | |
|---|---|---|---|---|---|---|
| (Unit: parts by weight) | | | | | | |

**[Table 3]**

| Item | DMC | PA | TFEE | BM |
|---|---|---|---|---|
| Comparative Example 7 | 65 | - | 35 | - |
| Comparative Example 8 | 65 | - | - | 35 |
| Comparative Example 9 | 97 | - | 3 | - |
| Comparative Example 10 | 100 | - | - | - |
| Comparative Example 11 | - | 65 | 35 | - |
| Comparative Example 12 | - | 65 | - | 35 |
| Comparative Example 13 | - | 97 | 3 | - |
| Comparative Example 14 | - | 100 | - | - |

| | | | | |
|---|---|---|---|---|
| (Unit: parts by weight) | | | | |

### Experimental Example

The physical properties and characteristics of the porous films manufactured in the above examples and comparative examples were measured and evaluated by the following methods, and the results are shown in Table 4 below.
- Kauri-butanol value (KBV): Measured by applying ASTM D 1133
- Flammability: O if the flash point measured using a Tag closed cup flash point tester is 25°C or below, X if above 25°C
- Drying time (min): The time required to completely dry and remove the extraction solvent remaining in the porous film at 50°C after extracting and removing the paraffin oil is measured.
- Extraction rate (%): Calculated according to the following formula <Formula> 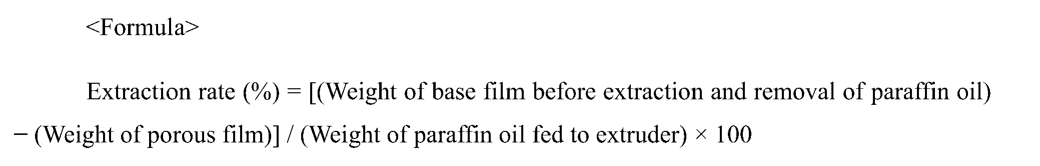 Extraction rate (%) = [(Weight of base film before extraction and removal of paraffin oil) - (Weight of porous film)] / (Weight of paraffin oil fed to extruder) × 100

**[Table 4]**

| Item | KBV | Flammability | Drying Time | Extraction Rate |
|---|---|---|---|---|
| Example 1 | 125 | X | 10 | 95 |
| Example 2 | 128 | X | 12 | 96 |
| Example 3 | 124 | X | 14 | 95 |
| Example 4 | 119 | X | 15 | 94 |
| Example 5 | 115 | X | 16 | 94 |
| Example 6 | 110 | X | 16 | 93 |
| Example 7 | 110 | X | 17 | 92 |
| Example 8 | 102 | X | 19 | 91 |
| Example 9 | 100 | X | 20 | 90 |
| Comparative Example 1 | 135 | X | 5 | 98 |
| Comparative Example 2 | 125 | X | 4 | 96 |
| Comparative Example 3 | 110 | O | 30 | 92 |
| Comparative Example 4 | 130 | O | 4 | 97 |
| Comparative Example 5 | 120 | O | 5 | 95 |
| Comparative Example 6 | 28 | X | 360 | 65 |
| Comparative Example 7 | 95 | X | 28 | 84 |
| Comparative Example 8 | 90 | X | 31 | 81 |
| Comparative Example 9 | 126 | O | 8 | 96 |
| Comparative Example 10 | 129 | O | 8 | 97 |
| Comparative Example 11 | 88 | X | 42 | 80 |
| Comparative Example 12 | 82 | X | 55 | 78 |
| Comparative Example 13 | 123 | O | 11 | 95 |
| Comparative Example 14 | 129 | O | 7 | 96 |

The foregoing description of the present invention is for illustrative purposes, and those skilled in the art to which the present invention pertains will understand that it is possible to easily modify the invention into other specific forms without changing the technical spirit or essential features of the present invention. Therefore, the embodiments described above should be understood as illustrative in all respects and not restrictive. For example, each component described as a single type may be implemented in a distributed manner, and similarly, components described as distributed may be implemented in a combined form.

The scope of the present invention is indicated by the following claims, and all changes or modifications derived from the meaning and scope of the claims and their equivalent concepts should be interpreted as being included in the scope of the present invention.

## Claims

1. A solvent composition used for manufacturing a porous film having a plurality of pores by selectively extracting and removing a pore-forming agent from a base film comprising a polyolefin and a pore-forming agent, the solvent composition comprising:
at least one of an alkyl carbonate and an alkyl acetate, and
a non-chlorinated halogen compound.

2. The solvent composition of claim 1, wherein the alkyl carbonate is one selected from the group consisting of ethylene carbonate, propylene carbonate, dimethyl carbonate, diethyl carbonate, dipropyl carbonate, methylpropyl carbonate, ethylmethyl carbonate, ethylpropyl carbonate, 1,2-butylene carbonate, 2,3-butylene carbonate, 1,2-pentylene carbonate, 2,3-pentylene carbonate, fluoroethylene carbonate, fluoropropylene carbonate, difluoropropylene carbonate, bromopropylene carbonate, dibromopropylene carbonate, nitropropylene carbonate, cyanopropylene carbonate, and combinations of two or more thereof.

3. The solvent composition of claim 1, wherein the alkyl acetate is one selected from the group consisting of methyl acetate, ethyl acetate, propyl acetate, butyl acetate, and combinations of two or more thereof.

4. The solvent composition of claim 1, wherein the non-chlorinated halogen compound comprises a fluorine-based ether compound.

5. The solvent composition of claim 4, wherein the fluorine-based ether compound is one selected from the group consisting of 1,1,2,2-tetrafluoroethyl 2,2,2-trifluoroethyl ether; 1,1,2,2-tetrafluoroethyl 2,2,3,3-tetrafluoropropyl ether; bis(fluoromethyl) ether; 2-fluoromethyl ether; bis(2,2,2-trifluoroethyl) ether; propyl 1,1,2,2-tetrafluoroethyl ether; isopropyl 1,1,2,2-tetrafluoroethyl ether; 1,1,2,2-tetrafluoroethyl isobutyl ether; 1,1,2,3,3,3-hexafluoropropyl ethyl ether; 1H,1H,2'H,3H-decafluorodipropyl ether; 1H,1H,2'H-perfluorodipropyl ether; and combinations of two or more thereof.

6. The solvent composition of claim 1, wherein the non-chlorinated halogen compound comprises a bromine-based compound.

7. The solvent composition of claim 6, wherein the bromine-based compound is one selected from the group consisting of dibromomethane, dibromoethane, dibromopropane, dibromobutane, dibromocyclohexane, dibromobenzene, and combinations of two or more thereof.

8. The solvent composition of claim 1, wherein the content of the non-chlorinated halogen compound in the solvent composition is 5 to 30% by weight.

9. The solvent composition of claim 1, wherein the Kauri-butanol value of the solvent composition is 100 or more.

10. A method for manufacturing a porous film using the solvent composition of any one of claims 1 to 9, comprising: (a) forming a raw material comprising a polyolefin and a pore-forming agent to manufacture a base film; (b) applying the solvent composition to the base film to selectively extract and remove the pore-forming agent from the base film; and (c) drying the base film to remove the remaining solvent composition.

11. The method of claim 10, wherein the polyolefin includes one selected from the group consisting of polyethylene, polypropylene, polybutylene, polymethylpentene, ethylene vinyl acetate, ethylene butyl acrylate, ethylene ethyl acrylate, and combinations or copolymers of two or more thereof.

12. The method of claim 10, wherein the pore-forming agent is a paraffin oil having a kinematic viscosity of 50 to 100 cSt at 40°C.

13. The method of claim 10, wherein the drying in step (c) is performed for 1 to 20 minutes.

14. The method of claim 10, further comprising, between steps (a) and (b), a step (b0) of stretching the base film.

15. The method of claim 10, further comprising, between steps (b) and (c), a step (b1) of stretching the product of step (b).
